## Europäisches Patentamt
## European Patent Office
## Office européen des brevets

(19)

(11) Numéro de publication: **0 110 444**
**B1**

(12)

# FASCICULE DE BREVET EUROPEEN

(45) Date de publication du fascicule du brevet:
**02.04.86**

(21) Numéro de dépôt: **83201518.4**

(22) Date de dépôt: **24.10.83**

(51) Int. Cl.⁴: **H 04 M 19/02**

(54) **Générateur de signal de sonnerie.**

(30) Priorité: **27.10.82 FR 8217979**

(43) Date de publication de la demande:
**13.06.84 Bulletin 84/24**

(45) Mention de la délivrance du brevet:
**02.04.86 Bulletin 86/14**

(84) Etats contractants désignés:
**DE FR GB IT SE**

(56) Documents cités:
**US - A - 3 778 730**

**PATENTS ABSTRACTS OF JAPAN, vol. 6, no. 111
(E-114)[989], 22 juin 1982**

(73) Titulaire: **TELECOMMUNICATIONS
RADIOELECTRIQUES ET TELEPHONIQUES T.R.T.,
88, rue Brillat Savarin, F-75013 Paris (FR)**

(72) Inventeur: **Forestier, Alain, SOCIETE CIVILE
S.P.I.D. 209 rue de l'Université, F-75007 Paris (FR)**
Inventeur: **Fenaux, Philippe, SOCIETE CIVILE
S.P.I.D. 209 rue de l'Université, F-75007 Paris (FR)**

(74) Mandataire: **Chaffraix, Jean et al, Société Civile
S.P.I.D. 209, rue de l'Université, F-75007 Paris (FR)**

## Description

L'invention concerne un générateur de signal de sonnerie, alimenté en courant continu et destiné à fournir le signal de sonnerie pour un groupe de lignes d'abonnés téléphoniques.

Un tel générateur de signal de sonnerie est utilisable dans un central téléphonique ou dans des stations de raccordement de lignes d'abonnés téléphoniques pour l'alimentation en signal de sonnerie d'un certain nombre de lignes téléphoniques, à partir d'une source de courant continu.

Ces générateurs doivent être capables de fournir un signal ayant par exemple une fréquence de 25 ou de 50 Hz et un niveau d'environ 80 V, avec une puissance suffisante pour alimenter simultanément en signal de sonnerie un nombre de lignes téléphoniques dépendant du trafic des abonnés. D'autre part, il est impératif que, lorsqu'un générateur est sollicité pour fournir des trains de signal de sonnerie, ayant par exemple en France une durée de 1,7 s et séparés par des intervalles de 3,3 s, ces trains s'établissent très rapidement.

Les convertisseurs classiques de tension continue en tension alternative peuvent remplir ces exigences, à condition de les laisser fonctionner en permanence dans le même état, de façon que, lorsqu'une ligne téléphonique est connectée à la sortie de ces convertisseurs, la tension de sonnerie s'y établisse immédiatement. En effet, ces convertisseurs, qui sont constitués par exemple d'un oscillateur à la fréquence du signal de sonnerie, suivi d'un étage d'amplification de puissance, ne peuvent passer d'un état de repos à un état de travail sans un temps d'établissement assez long.

Mais, par ailleurs, ces convertisseurs connus dissipent une puissance relativement importante à vide de sorte que les générateurs de signal de sonnerie utilisant de tels convertisseurs fonctionnant en permanence dans le même état consomment beaucoup d'énergie pendant tout le temps où ils n'ont à fournir aucun signal de sonnerie. C'est un inconvénient particulièrement grave pour des générateurs de signaux de sonnerie installés dans des stations de raccordement de lignes d'abonnés à faible trafic, ces stations devant être dans certains cas alimentées par des panneaux solaires. L'exemple qui suit permet de donner une mesure de cet inconvénient. On se place dans le cas d'une station raccordée à 20 lignes d'abonnés ayant un trafic de 0,1 erlang, qui correspond approximativement à un appel arrivé, par abonné et par heure, 18 h sur 24. On admet qu'un appel d'abonné aboutit après 5 trains de sonnerie, ce qui correspond sensiblement à 9 s de sonnerie active. En supposant que l'on utilise un convertisseur dissipant à vide une puissance de 1,7 W, l'énergie consommée par jour par le convertisseur se monte sensiblement à $24 \times 3600 \times 1,7 \cdot 10^{-4} \# 147$ kJ. Cette énergie consommée en pure perte est à comparer à l'énergie utile nécessaire pour l'appel des abonnés pendant une journée. Si la puissance d'un signal de sonnerie est 1,6 W (80 V, 20 mA), cette énergie utile se monte sensiblement à $1,6 \cdot 10^{-3} \times 9 \times 18 \times 20 \# 5,2$ kJ.

La présente invention permet d'éviter cet inconvénient en fournissant un générateur de signal de sonnerie susceptible d'être mis dans un état de repos à faible dissipation de puissance et d'être établi dans un état de travail en un temps très court.

Ce générateur de signal de sonnerie destiné à fournir le signal de sonnerie pour un groupe de lignes d'abonnés téléphoniques, alimenté en courant continu de même conception que celle du générateur de signal de sonnerie décrit dans le brevet japonais N° 57-41068(A) comporte en cascade un générateur de signal numérique, un convertisseur numérique-analogique et des moyens d'amplification; il en diffère conformément à l'invention par le fait que ledit générateur de signal numérique est commandable par un signal de commande pour fournir en un temps très court un signal correspondant soit au signal de sonnerie, soit à un signal nul selon qu'un signal de sonnerie ou aucun signal (n') est à fournir pour le groupe de lignes d'abonnés, lesdits moyens d'amplification comportant un étage amplificateur en classe A à liaisons par condensateurs suivi d'un étage amplificateur en classe B à liaisons continues fournissant le signal de sortie du générateur de signal de sonnerie.

Avec un tel générateur, on a obtenu un temps d'établissement de l'ordre de 10 ms, ce qui permet de mettre ce générateur dans un état de repos lorsqu'il n'a à fournir aucun signal de sonnerie. Pour cet état de repos, la dissipation de puissance est par exemple de 70 mW, ce qui correspond à une consommation d'énergie par jour de $24 \times 3600 \times 0,070 \cdot 10^{-3} \simeq 6$ kJ, à comparer avec 147 kJ pour un convertisseur classique, selon l'exemple donné ci-dessus.

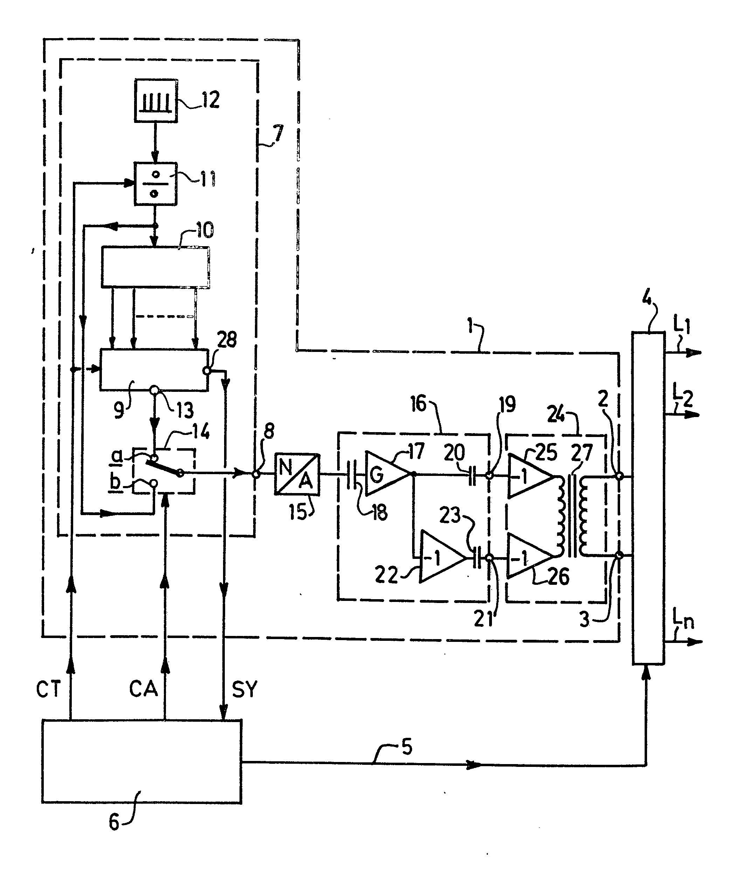

La description suivante, en regard du dessin annexé, le tout donné à titre d'exemple, fera bien comprendre comment l'invention peut être réalisée.

La figure unique représente un schéma du générateur de signal de sonnerie conforme à l'invention.

Le générateur 1 représenté sur cette figure est destiné à fournir, à partir d'une source de courant continu non représentée, un signal de sonnerie pour un certain nombre de lignes d'abonnés téléphoniques $L_1$ à $L_n$. Les bornes de sortie 2, 3 du générateur 1 sont connectées à un ensemble 4 de joncteurs d'abonnés, non représentés individuellement. Chaque joncteur d'abonné comporte en particulier un relais de sonnerie pour transmettre le signal de sonnerie fourni par le générateur 1 vers l'une des lignes d'abonnés $L_1$ à $L_n$. Chaque relais de sonnerie peut être commandé au rythme des trains de sonnerie par un signal de commande apparaissant sur le bus 5 et engendré dans un organe central de commande 6.

Le générateur de signal de sonnerie comporte plusieurs éléments en cascade, et tout d'abord un générateur de signal numérique 7 qui est commandé conformément à l'invention par le signal de commande CA engendré par l'organe central 6, pour fournir sur sa borne de sortie 8 un signal numérique correspondant soit au signal de sonnerie, soit à un signal nul. Lorsque au moins un relais de sonnerie des joncteurs de l'ensemble 4 est commandé pour la transmission du signal de sonnerie vers les lignes L₁ à Lₙ, le signal de commande CA est tel qu'il apparaît sur la borne 8 un signal numérique correspondant au signal de sonnerie et, lorsque aucun relais de sonnerie n'est commandé pour la transmission du signal de sonnerie, le signal numérique sur la borne 8 correspond à un signal nul.

Sous la forme de réalisation représentée sur la figure, le générateur de signal numérique 7 comporte une mémoire 9 dans un emplacement de laquelle sont stockés par exemple 256 échantillons codés en MIC d'un signal sinusoïdal limité à une période. Cette mémoire est lue au moyen des 256 adresses que peut fournir le compteur 10 à 8 bits. Ce compteur 10 compte les impulsions fournies par le diviseur de fréquence 11 et se remet automatiquement à zéro lorsqu'il a atteint sa position finale. Le diviseur de fréquence 11 reçoit les impulsions d'un générateur d'horloge 12. De cette manière, on obtient à la sortie 13 de la mémoire 9 la version numérique codée en MIC d'un signal sinusoïdal dont la fréquence dépend notamment du facteur de division du diviseur de fréquence 11. Ce facteur de division peut être modifié pour adapter le générateur aux différentes fréquences de signal de sonnerie possibles, telles que 50, 25 ou 16,33 Hz. Si, par exemple, la fréquence d'horloge fournie par le générateur 12 est de 2,048 MHz, et si le facteur de division est de 160, on obtient à la sortie 13 de la mémoire 9 un signal numérique correspondant à un signal sinusoïdal de 50 Hz échantillonné 256 fois par période. Le générateur 7 comporte d'autre part un circuit d'aiguillage 14 qui est commandé par le signal de commande CA provenant de l'organe central de commande 6, pour être établi sur la position a ou sur la position b. Sur la position a, la sortie 13 de la mémoire 9 est reliée à la borne de sortie 8 du générateur 7, ce qui correspond sur cette borne 8 au signal de sonnerie. Sur la position b, la sortie du diviseur de fréquence 11, qui fournit à une fréquence élevée une suite de bits 1 et 0 alternés, est reliée à la borne de sortie 8 du générateur 7, de sorte que sur cette borne 8 apparaît la version numérique d'un signal nul.

La borne de sortie 8 du générateur de signal numérique 7 est connectée à un convertisseur numérique-analogique 15 qui fournit soit un signal de sonnerie analogique à bas niveau découpé au rythme du signal de commande CA, soit un signal analogique de valeur quasiment nulle. La sortie du convertisseur 15 répond pratiquement sans retard à la commande déterminée sur le signal de commande CA.

Pour élever le niveau du signal de sonnerie, la sortie du convertisseur 15 est connectée à un amplificateur 16 fonctionnant en classe A et muni de condensateurs de liaison. Cet amplificateur 16 comporte un amplificateur 17 qui reçoit le signal d'entrée à travers un condensateur de liaison 18 et qui a un gain G suffisant pour amener le signal au niveau requis. La sortie de l'amplificateur 17 est reliée, d'une part, à la borne de sortie 19 via le condensateur de liaison 20 et, d'autre part, à la borne de sortie 21 via l'amplificateur 22 de gain −1 et le condensateur de liaison 23.

Sur les deux bornes de sortie 19 et 21 de l'amplificateur 16, on obtient deux tensions en opposition de phase aptes à commander avec un niveau suffisant un amplificateur de puissance 24 de type push-pull, fonctionnant en classe B. Cet amplificateur est à liaisons continues et comporte deux amplificateurs 25 et 26 de gain −1, dont les sorties sont reliées aux deux extrémités de l'enroulement primaire du transformateur 27. L'enroulement secondaire de ce transformateur est connecté aux deux sorties du générateur du signal de sonnerie. Généralement, le transformateur utilisé comporte deux enroulements secondaires identiques, ce qui permet, par une polarisation adéquate, d'obtenir le signal de sonnerie sous forme de deux tensions symétriques.

Les condensateurs de liaison 18, 20 et 23 ont pour but d'éviter de transmettre vers les entrées de l'amplificateur de puissance 24 des tensions d'offset inévitables qui peuvent apparaître à la sortie du convertisseur 15 et à la sortie des amplificateurs 17 et 22. De cette manière, l'amplificateur de puissance 24, fonctionnant en classe B, n'a pratiquement aucune consommation d'énergie lorsque le générateur 1 est dans son état de repos, c'est-à-dire n'est pas sollicité pour fournir le signal de sonnerie. L'amplificateur 16 fonctionnant en classe A et le générateur de signal numérique 7 ont une consommation très faible, de sorte que l'ensemble du générateur de signal de sonnerie 1 a une consommation très faible dans son état de repos.

D'autre part, les condensateurs de liaison 18, 20 et 23 et d'autres condensateurs de liaison qui peuvent être inclus dans les éléments d'amplification 17 et 22 sont chargés par des tensions de polarisation déterminées par le point de fonctionnement en classe A de ces éléments et ne dépendent donc pas de l'état de repos ou de travail du générateur de signal de sonnerie. Il en résulte que ces condensateurs n'apportent pratiquement aucun retard dans l'établissement des trains de signal de sonnerie à la sortie de l'amplificateur 16. Enfin, il est clair que l'amplificateur de puissance 24 à liaisons continues ne retarde pas non plus l'établissement des trains de sonnerie sur les bornes de sortie 2 et 3 du générateur de signal de sonnerie.

Grâce à l'ensemble des dispositions décrites plus haut, on obtient finalement un générateur de signal de sonnerie ayant à la fois une fiable consommation au repos et un temps rapide d'établissement.

Avec ce générateur, on peut en outre éviter facilement que des surtensions dangereuses soient engendrées sur les lignes d'abonnés par la coupure du signal de sonnerie par les relais de sonnerie. Il est avantageux pour cela de munir la mémoire 9 d'une sortie 28 pour un signal SY dit de synchronisation. Ce signal de synchronisation SY est formé d'impulsions apparaissant avec un décalage de temps fixe et pouvant être nul, par rapport à l'instant où les échantillons de valeur nulle apparaissent à la sortie 13 de la mémoire 9. Ce signal de synchronisation SY peut indiquer ainsi de façon précise les instants où s'annule le signal alternatif de sonnerie apparaissant sur les bornes de sortie 2, 3 du générateur. Le signal SY est appliqé à l'organe central 6 qui, *via* le bus 5, transmet le signal de commande des relais de sonnerie. La coupure des relais de sonnerie n'est autorisée qu'au moment des impulsions du signal de synchronisation SY, ce qui évite les surtensions sur les lignes d'abonnés.

La conception du générateur 1 de l'invention permet aisément de lui faire remplir un autre rôle que celui d'engendrer des signaux de sonnerie. Il peut être utilisé par exemple pour engendrer des signaux de test basse fréquence dans la bande téléphonique. De tels signaux peuvent être utilisés pour le test de lignes d'abonnés ou le test de joncteurs d'abonné suivant par exemple le système décrit dans la demande de brevet français publiée N° 81.05408.

Pour que le générateur 1 puisse engendrer un signal supplémentaire de test, la mémoire 9 comporte un emplacement supplémentaire pour stocker des échantillons MIC du signal de test désiré. Pour l'émission d'un signal de test, l'organe central de commande 6 fournit un signal de commande de CA pour établir le circuit d'aiguillage 14 dans la position a et un signal de commande de test CT décalant les adresses fournies par le compteur 9, afin de lire les échantillons du signal de test dans l'emplacement de la mémoire 9 réservé à ces échantillons. Dans certaines applications, il peut être nécessaire de faire agir la commande de test CT de manière à modifier le facteur de division du diviseur de fréquence 11. Le signal de test numérique obtenu sur la borne 8 est appliqué au convertisseur 15 pour être converti en signal analogique. Ce dernier est amplifié dans les amplificateurs 16 et 24 avant d'être appliqué à l'ensemble 4 de joncteurs d'abonné. Pour obtenir avec une bonne précision à la sortie du générateur 1 à la fois le signal de sonnerie à fort niveau et un signal analogique de test à bas niveau, il peut être avantageux que les échantillons de ces deux signaux stockés dans la mémoire 9 soient codés en MIC comprimé, le convertisseur numérique-analogique 15 étant alors du type convenant à ce codage.

## Revendications

1. Générateur de signal de sonnerie (1) destiné à fournir le signal de sonnerie pour un groupe de lignes d'abonnés téléphoniques ($L_1$ à $L_n$), alimenté en courant continu et comportant en cascade un générateur de signal numérique (7), un convertisseur numérique-analogique (15) et des moyens d'amplification (16, 24), caractérisé en ce que ledit générateur de signal numérique (7) est commandable par un signal de commande (CA) pour fournir en un temps très court un signal correspondant soit au signal de sonnerie, soit à un signal nul selon qu'un signal de sonnerie ou aucun signal (n') est à fournir pour le groupe de lignes d'abonnés, lesdits moyens d'amplification comportant un étage amplificateur en classe A (16) à liaisons par condensateurs suivi d'un étage amplificateur en classe B (24) à liaisons continues fournissant le signal de sortie du générateur de signal de sonnerie.

2. Générateur de signal de sonnerie selon la revendication 1, caractérisé en ce que le générateur de signal numérique (7) est agencé pour fournir en outre un signal de synchronisation (SY) formé d'impulsions apparaissant avec un décalage de temps fixe et pouvant être nul, par rapport aux instants où s'annule le signal numérique correspondant au signal de sonnerie, ce signal de synchronisation étant utilisable pour n'autoriser la coupure du signal de sonnerie qu'aux instants où le signal de sonnerie est quasiment nul.

3. Générateur de signal de sonnerie selon l'une des revendications 1 ou 2, utilisé de plus pour fournir un signal de test pour ledit groupe de lignes d'abonnés, caractérisé en ce que le générateur de signal numérique est commandable en outre par un signal de commande supplémentaire (CT) pour fournir, à la place du signal numérique correspondant au signal de sonnerie, un signal numérique correspondant à un signal de test.

4. Générateur de signal de sonnerie selon la revendication 3, caractérisé en ce que les signaux fournis par ledit générateur de signal numérique et correspondant au signal de sonnerie ou au signal de test sont codés en MIC compressé afin d'obtenir une grande dynamique des signaux de sortie du générateur de signal de sonnerie.

## Patentansprüche

1. Gleichstromgespeister Klingelsignalgenerator (1) zum Erzeugen des Klingelsignals für eine Gruppe von Fernsprechteilnehmerleitungen ($L_1$ bis $L_n$) mit einer Kaskadenschaltung eines digitalen Signalgenerators (7), eines Digital-Analog-Wandlers (15) und Verstärkungsmittel (16, 24), dadurch gekennzeichnet, dass der genannte Digitalsignalgenerator (7) durch ein Steuersignal (CA) steuerbar ist zum Erzeugen eines Signals in einer sehr kurzen Zeit, das entweder dem Klingelsignal oder einem Null-Signal entspricht und zwar abhängig von der Tatsache, ob ein Klingelsignal oder kein Signal (n') für die Gruppe von Teilnehmerleitungen erzeugt werden muss, wobei die genannten Verstärkungsmittel eine kapazitiv gekoppelte Klasse-A-Verstärkerstufe (16) mit einer nachfolgenden direkt gekoppelten Klasse-B-Verstärkerstufe (24) aufweist zum Erzeugen des Ausgangssignals des Klingelsignalgenerators.

2. Klingelsignalgenerator nach Anspruch 1, dadurch gekennzeichnet, dass der digitale Signalgenerator (7) weiterhin ein Synchronsignal (SY) erzeugt, das aus Impulsen gebildet wird, die mit einer festen Zeitverschiebung erscheinen, wobei diese Zeitverschiebung den Wert Null aufweisen kann und zwar in bezug auf die Zeitpunkte, wo das digitale Signal, das dem Klingelsignal entspricht, annuliert wird, wobei dieses Synchronsignal verwendet werden kann, um das Klingelsignal abzuschneiden nur zu Zeitpunkten, wo das Klingelsignal im wesentlichen Null ist.

3. Klingelsignalgenerator nach einem der Ansprüche 1 oder 2, der weiterhin zum Erzeugen eines Testsignals für die genannte Gruppe von Teilnehmerleitungen verwendet wird, dadurch gekennzeichnet, dass der Digitalsignalgenerator weiterhin durch ein zusätzliches Steuersignal (CT) steuerbar ist zum, statt des digitalen Signals, das dem Klingelsignal entspricht, Erzeugen eines Digitalsignals, das einem Testsignal entspricht.

4. Klingelsignalgenerator nach Anspruch 3, dadurch gekennzeichnet, dass die von dem genannten Digitalsignalgenerator erzeugten Signale, die dem Klingelsignal oder dem Testsignal entsprechen, in komprimierter PCM kodiert sind, um eine hohe Dynamik der Ausgangssignale des Klingelsignalgenerators zu erzielen.

## Claims

1. A d.c.-fed ringing signal generator (1) which is intended to produce the ringing signal for a group of subscriber lines ($L_1$ to $L_n$), comprising a cascade arrangement of a digital signal generator (7), a digital-to-analog converter (15) and amplifier means (16, 24), characterized in that the said digital signal generator is controllable by a control signal (CA) to produce in a very short time a signal which corresponds either to the ringing signal or to a zero signal depending on whether a ringing signal or no signal (n') must be produced for the group of subscriber lines, the said amplifier means comprising a capacitively-coupled class-A amplifier stage (16) followed by a direct-coupled class-B amplifier stage (24), producing the output signal of the ringing signal generator.

2. A ringing signal generator as claimed in Claim 1, characterized in that the digital signal generator (7) is arranged to produce furthermore a synchronizing signal (SY) formed from pulses appearing with a fixed time shift, which shift may have zero value, relative to the instants at which the digital signal corresponding to the ringing signal is controlled, this synchronizing signal being usable to allow cut-off of the ringing signal only at instants at which the ringing signal is substantially zero.

3. A ringing signal generator as claimed in one of the Claims 1 or 2, which is furthermore used to produce a test signal for the said group of subscriber lines, characterized in that the digital signal generator is moreover controllable by an additional control signal (CT) to produce instead of the digital signal corresponding to the ringing signal, a digital signal corresponding to a test signal.

4. A ringing signal generator as claimed in Claim 3, characterized in that the signals produced by the said digital signal generator and which corresponds to the ringing signal or to the test signal are encoded in compressed PCM so as to obtain a high dynamic range of the output signals of the ringing signal generator.